# EUROPÄISCHE PATENTSCHRIFT

(11) **EP 2 148 126 B1**
(45) Veröffentlichungstag und Bekanntmachung des Hinweises auf die Patenterteilung: **12.01.2011**
(21) Anmeldenummer: 08405185.3
(22) Anmeldetag: 25.07.2008
(51) Int. Cl.: F16M 7/00

(54) **Positionierhilfe**
Positioning aid
Aide au positionnement

(43) Veröffentlichungstag der Anmeldung: 27.01.2010
(73) Patentinhaber: Schneeberger Holding AG, 4914 Roggwil (CH)
(72) Erfinder: Raible, Adrian, 1255 Veyrier/GE (CH); Wälti, Beat, 3368 Bleienbach (CH); Schumacher, Urs, 8008 Zürich (CH)
(74) Vertreter: EGLI-EUROPEAN PATENT ATTORNEYS

(56) Entgegenhaltungen:
- EP-A- 0 919 763
- DE-A1- 2 121 342
- GB-A- 1 368 630
- US-A- 4 100 714

## Beschreibung

Die Erfindung betrifft ein Verfahren nach dem Oberbegriff des Anspruchs 1. Weiterhin betrifft die Erfindung eine Anordnung nach dem Oberbegriff des Anspruchs 8.

Im Maschinenbau werden Maschinen je nach Typ und Einsatzgebiet mit einer Unterkonstruktion bzw. einem Unterbau versehen, zum Beispiel EP0919763 A1. Der einfachste konstruktive Unterbau sind einstellbare Füße, mit denen Unebenheiten im Boden ausgeglichen werden können. Für gewöhnlich ist der Unterbau einer Maschine aber sehr viel aufwändiger konstruiert. Besonders im Präzisionsmaschinenbau wird besonderes Augenmerk auf den Unterbau gelegt. Hier dient derselbige nicht nur der Nivellierung oder auch Erhöhung der Maschine, sondern auch als Dämpfer gegen unerwünschte Schwingungen. Die Unterbaue von Präzisionsmaschinen- werden deshalb aus besonders schweren Materialien gefertigt. Zudem dürfen die Materialien nur einen geringen-Wärmeausdehnungskoeffizienten aufweisen, so dass neben Speziallegierungen auch Stein, insbesondere Granit eingesetzt wird.

Im Laufe der Zeit hat sich indes gezeigt, dass die Bearbeitung von Granitblöcken beschwerlich ist. Deshalb ist man dazu übergegangen, die Unterbaue anstelle von monolithischen Konstruktionen aus Mineralguss zu fertigen. Mineralguss hat den Vorteil, präzise an die Bauform -der Maschine angepasst zu werden und dennoch die Vorteile von Gesteinen aufzuweisen. Zudem werden die Mineralgussbauteile in kleineren Einheiten gegossen, die später zusammengesetzt den Unterbau einer Präzisionsmaschine bilden. Ein weiterer Vorteil für den Transport der Unterbaue.

Entscheidend bei der Zusammensetzung des Unterbaus ist die Ausrichtung der Einzelmineralgussteile zueinander. Aufgrund der Schwere der einzelnen Bauteile lassen sich diese nur mit erheblichem Aufwand bewegen und zueinander ausrichten. Deshalb werden die Mineralgussteile mit Ausnehmungen auf einer Unterseite versehen. In diese Ausnehmungen wird über ein innenliegendes Kanalsystem Pressluft zugeführt. Durch das in den Ausnehmungen entstehende Luftkissen wird das entsprechende Bauteil angehoben und kann somit leicht auf einem darunterliegenden Bauteil in Stellung gebracht werden.

Aber trotz der erleichterten Bewegung der Bauteile bedarf es nach wie vor einer hohen Präzision der Ausrichtung. Diese hat man bislang probiert dadurch zu erlangen, dass Markierungen an den übereinander oder zueinander liegenden Bauteilen angebracht wurden. Die Mineralgussteile werden an diesen Markierungen ausgerichtet, womit eine recht passable Präzision der Ausrichtung der Bauteile erzielt werden kann. Dennoch können mit diesem System der Ausrichtung nicht alle Anforderungen der Präzision erfüllt werden.

Der Erfindung liegt deshalb die Aufgabe zugrunde, eine Vorrichtung und ein Verfahren der eingangs genannten Art weiterzuentwickeln, mit dem bzw. der eine hochpräzise Ausrichtung auf einfache Weise möglich ist.

Die Aufgabe wird erfindungsgemäß durch ein Verfahren mit den Merkmalen des Anspruchs 1 gelöst. Danach wird ein die beiden Bauteile verbindendes Element fest in dem ersten Bauteil und in einem zweiten Bauteil in einer Ausnehmung angeordnet, wobei für eine feste Verbindung von dem Element mit dem zweiten Bauteil ein Zwischenraum zwischen Bauteil und Element mit einem sich verfestigendem Füllstoff ausgefüllt wird. Die beiden Bauteile werden zueinander relativ verschoben und relativ grob ausgerichtet, wobei sodann mittels des verbindenden Elements eine sehr präzise

Ausrichtung erzielt wird. Zuerst wird das Element mit dem ersten Bauteil verbunden, um sodann in der Ausnehmung des zweiten Bauteils von dem Füllstoff umschlossen zu werden. Dadurch muß das erste und zweite Bauteil nicht erstmalig hochgenau zu einander ausgerichtet werden. Erst bei einem späteren Wiederaufbauen wird mittels dieser Positionierhilfe eine exakte Ausrichtung erreicht.

Das verbindende Element weist wenigstens eine erste und zweite Halterung, einen Konus und einen Stift auf. Diese Mehrteiligkeit erlaubt es, das Element abschnittsweise zu montieren und erleichtert darüber hinaus auch die Demontage und Montage der Bauteile bzw. die Ausrichtung zueinander.

Die erste Halterung wird mit dem ersten Bauteil fest verbunden, vorzugsweise verschraubt. Die Halterung ist als Hülse ausgebildet zur Aufnahme des Konus. Da das zweite Bauteil zum ersten ausgerichtet wird, wird die Hülse in dem Bauteil schon vormontiert, bevor das zweite Bauteil auf dem ersten Bauteil angeordnet wird. Das spart Zeit. Zur Aufnahme des Konus weist die Halterung eine in Längsrichtung verlaufende Ausnehmung mit einer Kontur auf, die einer äußeren Kontur des Konus entspricht.

Gemäss der Erfindung wird die zweite Halterung fluchtend zu der ersten Hülse angeordnet. Die Halterung ist ebenfalls als Hülse ausgebildet. Der Konus erstreckt sich durch jeweils eine sich in einer Längsrichtung erstreckende Ausnehmung der ersten und zweiten Hülse. Die Halterungen sind derart zueinander angeordnet, dass die Kontur der einen Ausnehmung und eine Kontur der anderen Ausnehmung fortlaufend ist und der Konus gleichermaßen in beiden Halterungen an einer Oberfläche der Ausnehmung anliegt. Der Konus und die beiden Halterungen sind aus demselben Material gefertigt, so dass die beiden Halterungen und der Konus dieselben Materialeigenschaften aufweisen. Dieses ist insbesondere hinsichtlich eines Wärmeausdehnungskoeffizienten vorteilig, da unter Einfluss verschiedener Temperaturen, der Konus und die Halterungen gleichermaßen schrumpfen oder sich ausdehnen. Zusätzlich ist eine Materialverarbeitung der Halterungen leichter, als das Herausfräsen einer entsprechenden Kontur in die Bauteile selbst. Zudem könnte im Falle einer Beschädigung der Oberfläche die jeweilige Halterung leichter ausgetauscht werden, als die Ausnehmung in dem Bauteil nachzubearbeiten oder ein neues Bauteil zu gießen.

Gemäß einer bevorzugten Ausführungsform ist der Konus mit einem stumpfen Ende in der ersten Hülse angeordnet. Das stumpfe Ende ist das in einem Durchmesser grössere Ende des Konus, womit deutlich wird, das die Kontur der Ausnehmungen der Hülsen sich zu einem Ende in der Hülse in dem ersten Bauteil verjüngt.

Vorteilhafterweise wird zur lösbaren Verbindung der zweiten Hülse mit der ersten Hülse durch eine sich in einer Längsrichtung erstreckende Ausnehmung des Konus der Stift angeordnet. Die Ausnehmung weist eine mit dem Stift korrespondierende Kontur auf. Der Stift ist als eine Schraube ausgefertigt und weist im Wesentlichen eine zylindrische Form auf mit Kopf und Gewinde. Die Ausnehmung ist daran zumindest zum Teil angepasst und ist im Bereich des Schraubenkopfs im Durchmesser größer als die Ausnehmung des übrigen Stifts, da der Kopf der Schraube breiter als ein Schaft der Schraube ist. Im montierten Zustand liegt der Schraubenkopf auf einem durch die unterschiedlichen Durchmesser der Ausnehmung in dem Konus ausgebildeten Vorsprung auf.

Nach einer weiteren vorteilhaften Weiterbildung der Erfindung wird der Füllstoff in einen Zwischenraum zwischen zweiter Hülse und einer Oberfläche der Ausnehmung eingebracht. Die Ausnehmung in dem zweiten Bauteil weist hierfür einen wesentlich größeren Durchmesser als die Hülse auf. Zur Verbindung von Halterung mit dem Bauteil wird der Zwischenraum mit einem Kunstharz oder dergleichen ausgefüllt. Das Kunstharz erhärtet, wobei die Halterung mit dem Bauteil in der Halterung fest verbunden ist. Die andere Halterung wird in eine Ausnehmung des anderen Bauteils eingeschraubt. Hierzu weist ein oberer Randbereich mehrere Ausnehmungen auf, durch die Befestigungsmittel, insbesondere Schrauben hindurchsteckbar sind, die in korrespondierenden Bereichen der Oberfläche der Ausnehmung eingreifen und somit die Halterung in dem Bauteil fixieren. Andere Möglichkeiten mit einer festen Verbindung von Halterung und Bauteil sind ebenfalls möglich.

Bevorzugt wird nach einem Aushärten des Kunstharzes durch Lösen und Entfernen des Stifts und des Konus die Verbindung der beiden Bauteile gelöst. Vorteilhafterweise ist nach dem Aushärten des Kunstharzes durch Lösen der Verschlussschraube und Entfernen des Stifts und des Konus die Verbindung der beiden Bauteile lösbar. Die Bauteile können, da sie den Unterbau für eine Maschine bilden, demontiert werden und an anderer Stelle wieder zusammengefügt werden. Mittels des Konus ist die Positionierung des oberen Bauteils, unter Zuhilfenahme der luftgeführten Zentrierhilfe, leicht möglich. Nach der Positionierung wird der Konus mittels des Stifts fixiert, so dass die beiden Bauteile unverrückbar übereinanderliegen.

Das Verfahren zur Positionierung der zueinander auszurichtenden Bauteile sieht in einem ersten Arbeitsschritt vor, dass in die Ausnehmung des unter dem anderen Bauteil angeordneten Bauteils die erste als Hülse ausgebildete Halterung eingesetzt wird. Die Hülse wird mit dem Bauteil fest verbunden, insbesondere mit dem Bauteil verschraubt. Die Ausnehmungen selbst sind beim Herstellen der Bauteile bereits in dieselbigen eingeformt. Die Ausnehmung in dem über dem anderen Bauteil angeordneten Bauteil ist dabei durchgehend ausgebildet, wohingegen die andere Ausnehmung als Sackbohrung ausgeführt ist. Andere Ausführungsformen sind aber auch möglich. Die Ausnehmungen werden entweder beim Gießen der Mineralgussteile gegossen, oder in einem späteren Arbeitsgang ausgefräst. In einem zweiten Arbeitsschritt wird über der ersten Hülse die zweite als Hülse ausgebildete Halterung angeordnet, wobei eine Moosgummischeibe dazwischen angeordnet wird. Die zweite Hülse wird über der ersten Hülse möglichst derartig positioniert, dass die Ausnehmungen fluchten. In einem vierten Arbeitsschritt wird der Konus in die Hülsen eingeführt mit dem als Schraube ausgebildeten Stift. Der Konus zentriert die zweite Hülse im eingesetzten Zustand letztendlich. Die zweite Hülse wird mit der ersten Hülse durch Verschrauben der Schraube fest miteinander verbunden, wobei oberhalb des Konus die Verschlussschraube angeordnet wird. In einem vierten Arbeitsschritt wird der Zwischenraum zwischen der zweiten Hülse und der Oberfläche der Ausnehmung mit Kunstharz oder dergleichen ausgefüllt. Nach dem Aushärten des Kunstharzes ist die zweite Hülse ebenfalls fest mit einem Bauteil verbunden, womit die Montage abgeschlossen ist.

Weiterhin wird die Aufgabe der Erfindung durch eine Anordnung mit den Merkmalen des Anspruchs 8 gelöst. Die Anordnung mehrerer zueinander positionierbarer Elemente ist dadurch gekennzeichnet, dass eine erste und zweite Halterung konzentrisch zueinander mittels eines Konus ausgerichtet sind, wobei die erste Halterung in einer Ausnehmung des ersten Bauteils angeordnet und mit diesem fest verbunden ist. Die zweite Halterung ist in einer Ausnehmung des zweiten Bauteils angeordnet und ein Zwischenraum zwischen Bauteil und Halterung ist mit einem sich verfestigenden Füllstoff ausgefüllt zur festen Verbindung von zweiter Halterung mit zweitem Bauteil. Vor allem die Verbindung von zweiter Halterung und zweitem Bauteil bringt den Vorteil, dass die Bauteile bei einer Vormontage einer Maschine mit den Bauteilen als Unterbau beim Hersteller bereits übereinander angeordnet sind, wenn die zweite Hülse mit dem zweiten Bauteil verbunden wird. Es bedarf deshalb keiner exakten Ausrichtung der Bauteile zueinander. Ein am Übergang von erstem zu zweitem Bauteil gelegener Durchmesser der Ausnehmung, der größer als ein Durchmesser der darunter liegenden Halterung ist, erlaubt Abweichungen in der Ausrichtung der Bauteile.

Dabei ist ein Konus in einer Halterung relativ verschiebbar und ein Ende aufweisender Abschnitt des Konus erstreckt sich bei Anlage in der Halterung aus dieser heraus. Auf den über die Halterung hinausragenden Konus ist eine weitere Halterung positionierbar, so dass der Konus zwei Halterungen miteinander verbindet und zentriert. Durch die besondere Ausgestaltung der schrägen Oberfläche des Konus ist ein darauf angeordnetes Objekt zentral positioniert, insbesondere auch konzentrisch zu einem darunter liegenden Objekt. Deshalb ist der das vorzugsweise als Stumpf ausgebildete Ende aufweisende Abschnitt des Konus in einer weiteren Halterung anordenbar und relativ zu dieser auch verschiebbar.

Gemäß einer vorteilhaften Ausgestaltung der Erfindung ist ein Stift in einer Ausnehmung in dem Konus anordenbar für eine lösbare Verbindung von Konus und den beiden Halterungen. Der Stift ist dabei als insbesondere eine Schraube ausgebildet. Der Konus weist eine mit einer Außenkontur des Stifts korrespondierende mittige Ausnehmung auf. Mit dem Konus lassen sich die beiden zueinander angeordneten Bauteile noch einfacher ausrichten. Vorgesehen ist, dass ein Bauteil mit einer durchgehenden Ausnehmung versehen ist, durch die der Konus mit dem Stift zur Positionierung bzw. Ausrichtung der Bauteile durchsteckbar ist. Durch diese durchgehende Ausnehmung ist der Konus in die darunter liegende Ausnehmung einsteckbar, wobei der Konus mit einem Ende mit kleinerem Durchmesser in dem untenliegenden Bauteil angeordnet ist. Durch die geometrische Form des Konus wird die Zentrierung der beiden Bauteile erheblich erleichtert.

Vorteilig erstreckt sich der Konus durch eine jeweils in den Halterungen sich in einer Längsrichtung erstreckende Ausnehmung. Mit dem Konus sind die beiden Halterungen leicht zu einander auszurichten. Darüber hinaus werden auch die Bauteile genau ausgerichtet, wenn die Halterungen fest mit den jeweiligen Bauteilen verbunden sind.

Nach einer bevorzugten Ausführungsform erstreckt sich ein Stift durch eine sich in einer Längsrichtung des Konus erstreckende Ausnehmung zur lösbaren Verbindung der beiden Halterungen. Auch wenn es vorgesehen ist, dass die Bauteile allein durch ihr Gewicht unverrückbar übereinander liegen, bedarf es einer Sicherung der Positionierhilfe. Mit dem Stift wird auch das zweite Bauteil auf das erste Bauteil gezogen, wenn bei einer wiederholten Montage das zweite Bauteil über dem ersten Bauteil schwebend bewegt wird.

Weitere vorteilhafte Ausgestaltungen des Verfahrens und der Anordnung ergeben sich aus den Unteransprüchen.

Ein bevorzugtes Ausführungsbeispiel der Erfindung wird nachfolgend anhand der Zeichnung näher erläutert. In dieser zeigen:

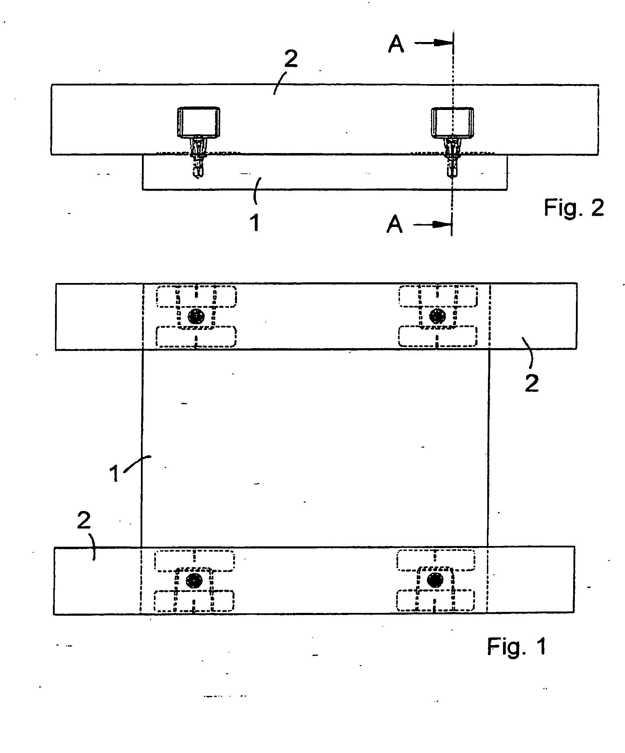

- Fig. 1: eine Draufsicht übereinander angeordneter Bauteile,
- Fig. 2: eine Seitenansicht übereinander angeordneter Bauteile,

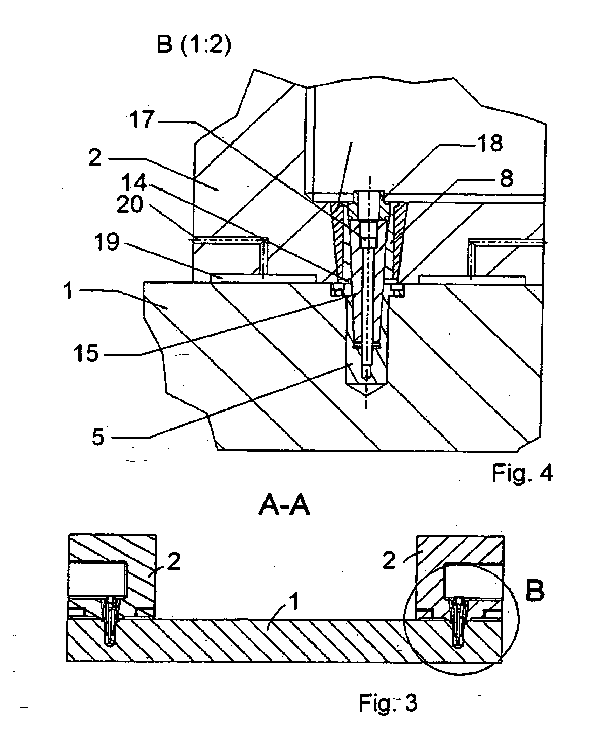

- Fig. 3: Schnitt entlang der Linie A-A der Fig. 2,
- Fig. 4: Ausschnitt B der Fig. 3,

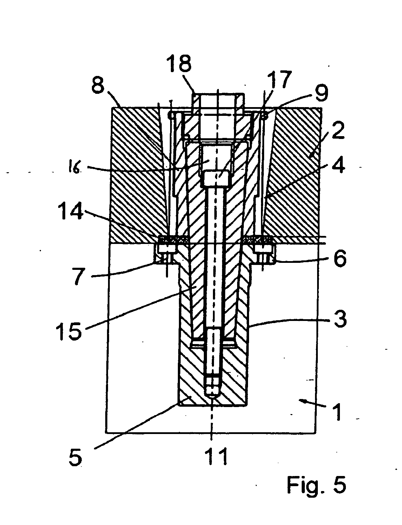

- Fig. 5: Schnitt durch eine Positionierhilfe im montierten Zustand,

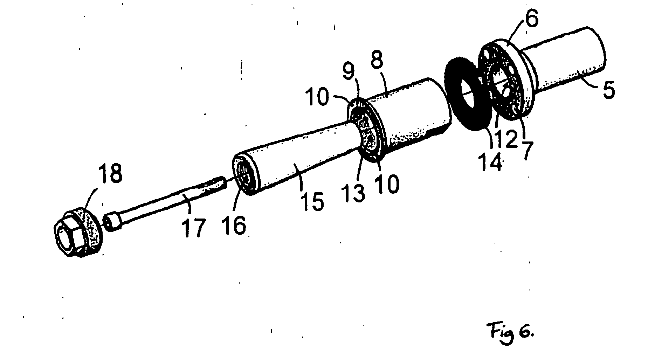

- Fig. 6: Explosionszeichnung der Positionierhilfe,

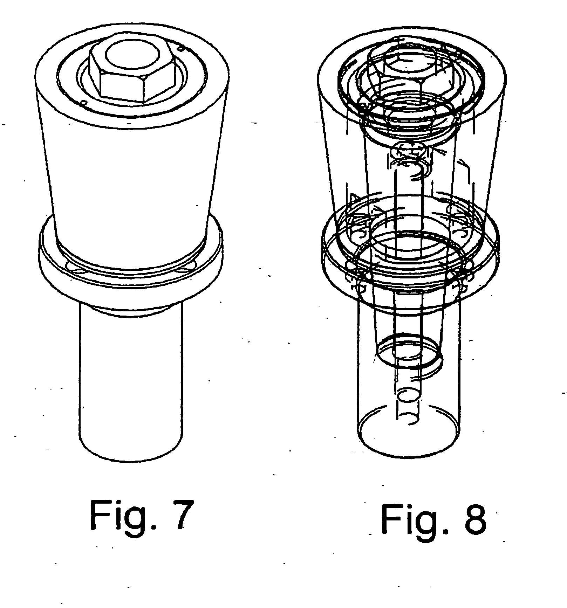

- Fig. 7: perspektivische Darstellung einer zusammengesetzten Positionierhilfe, und
- Fig. 8: perspektivische Darstellung der Positionierhilfe mit teilweise inneren Abmessungen.

Zur Positionierung zweier übereinander liegender Bauteile aus Mineralguss werden an einem Übergang der beiden Bauteile Positionierhilfen angeordnet. Die Positionierhilfen erstrecken sich dabei in einem ersten und einem zweiten Bauteil 1, 2. Für die Positionierhilfen sind in den Bauteilen 1, 2 Ausnehmungen 3, 4 vorgesehen, die miteinander korrespondieren. Die Ausnehmungen werden entweder in die fertigen Bauteile eingefräst oder bereits während des Mineralgussprozesses entsprechend ausgespart. Nachfolgend soll anhand der Zeichnung der Aufbau und Einbau einer Positionierhilfe näher erläutert werden.

In der ersten Ausnehmung 3 des ersten Bauteils 1 ist eine als Halterung ausgebildete Hülse 5 angeordnet. Die Hülse 5 ist im Wesentlichen zylindrisch, wobei eine Außenfläche der Ausnehmung 3 einer Kontur der Hülse 5 entspricht. In einem oberen zum zweiten Bauteil 2 gelegenen Bereich ist ein umlaufender Rand 6 mit der-Hülse 5 verbunden. Der Rand 6 ist in Form eines Flansches ausgebildet und weist Durchbrechungen 7 auf. Durch die Durchbrechungen 7 sind nicht dargestellte Befestigungsmittel, insbesondere Schrauben, durchsteckbar, die die Hülse 5 mit dem ersten Bauteil 1 fest verbinden. Andere Methoden der Befestigung sind ebenfalls denkbar, beispielsweise dass die Hülse 5 ein Außengewinde aufweist und in eine entsprechende Ausnehmung 3 eindrehbar ist.

Auf dem ersten Bauteil 1 liegt plan das zweite Bauteil 2 auf. Im Gegensatz zur ersten Ausnehmung 3, die als eine Sackbohrung ausgeführt ist, ist die zweite Ausnehmung eine Durchgangsbohrung mit zwei offenen Enden. In der zweiten Ausnehmung 4 ist nahezu konzentrisch mit der Hülse 5 eine weitere als Halterung ausgebildete Hülse 8 positioniert. Die Hülse 8 ist im Wesentlichen auch zylindrisch ausgeführt und weist an einem der Hülse 5 entgegengesetzten Ende einen umlaufenden Rand 9 auf.

Die zweite Ausnehmung 4 ist in ihren Abmessungen größer als die Hülse 8 ausgebildet. Außenflächen der zweiten Ausnehmung 4 sind dabei leicht schräg verlaufend, wobei ein im Durchmesser kleineres Ende der zweiten Ausnehmung 4 zum ersten Bauteil 1 gerichtet ist. Zwischen der Außenfläche der zweiten Ausnehmung 4 und der Hülse 8 besteht somit ein Zwischenraum, der mit einem sich verfestigendem Füllstoff ausgefüllt - ist. Als Füllstoff wird vorzugsweise ein Kunstharz oder dergleichen verwendet, der mit einem Aushärten eine feste Verbindung von Hülse 8 mit dem zweiten Bauteil 2 herstellt. Zusätzlich können in dem Rand 9 der Hülse 8 Durchbrechungen 10 vorgesehen sein, durch die nicht dargestellte Schrauben bzw. Befestigungsmittel steckbar sind zur zusätzlichen Verbindung der Hülse mit dem umgebenden Füllstoff.

Die konzentrisch zueinander liegenden Hülsen 5 und 8 weisen jeweils eine symmetrisch zu einer Achse 11 verlaufende Ausnehmung 12, 13 auf. Die Ausnehmung 12 der Hülse 5 ist als eine Sackbohrung ausgeführt. Die Kontur der Ausnehmung 12 ist abschnittsweise verschiedenartig ausgebildet. Ein einem offenen Ende der Hülse 5 zugewandter Abschnitt ist konusförmig gestaltet, wobei der Abschnitt sich in Richtung der Sackbohrung verjüngt. An diesem Abschnitt schließt sich ein weiterer konzentrisch dazu liegender Abschnitt an. Dieser weiteren Abschnitt ist erheblich kleiner im Durchmesser als der konisch ausgeführte obere Abschnitt, wobei am Übergang der beiden Abschnitte eine Stufe ausgebildet ist. Der weitere Abschnitt ist im Wesentlichen zylindrisch ausgebildet.

Die Ausnehmung 13 der Hülse 8 ist eine Durchgangsbohrung und abschnittsweise konisch ausgebildet. An einem oberen Ende der Hülse 8, der Hülse 5 gegenüberliegenden Seite, ist ein Endabschnitt zylindrisch ausgebildet. Eine benachbart zur Hülse 5 gelegene Öffnung der Hülse 8 entspricht einer Öffnung der Hülse 5. Die jeweils konisch ausgeführten Abschnitte der Hülsen 5 und 8 sind korrespondierend, so dass eine Oberfläche der Ausnehmungen 12 und 13 bis auf eine Unterbrechung am Übergang der Hülsen 5 und 8 plan ist, zu mindestens einen selben Winkel aufweist.

Zwischen den beiden Hülsen ist eine Dichtung 14 angeordnet. Diese Dichtung 14 dichtet die zweite Ausnehmung 4 gegenüber der Hülse 5 ab, damit das in den Zwischenraum eingegossene Kunstharz nicht in Berührung mit der Hülse 5 kommt und dort mit diesem verklebt. Abmessungen der Hülsen 5 und 8 sind derart angepasst, dass bei Auflage der Hülse 8 auf der Dichtung 14 die konusförmige Oberfläche nach wie vor plan ist. Die Ausgangsöffnung der Hülse 8 ist entsprechend größer gewählt.

In die Ausnehmungen 12 und 13 der Hülsen 5 und 8 ist ein Konus 15 positioniert. Der Konus 15 liegt in Dichtlage in den Hülsen 5 und 8, so dass die Hülsen 5, 8 exakt konzentrisch entlang der Achse 11 zueinander liegen. Der Konus 15 weist mittig eine im Wesentlichen zylindrische Ausnehmung 16 auf. Die Ausnehmung 16 ist als Durchgangsbohrung ausgebildet. Eine Ausgangsöffnung des Konus 15 korrespondiert mit dem zylindrisch ausgeführten Abschnitt der Ausnehmung 12. Eine andere Ausgangsöffnung des Konus 15 ist größer ausgebildet.

In der Ausnehmung 16 des Konus 15 ist ein Befestigungsmittel 17 angeordnet. Das Befestigungsmittel ist vorzugsweise eine Schraube, wobei aber auch jegliche andere stiftförmige Mittel einsetzbar sind. Das Befestigungsmittel 17 wird mit einem Gewinde in der Hülse 5 verschraubt, wobei der zylindrische Abschnitt der Hülse 5 ebenfalls ein Gewinde aufweist. Die Ausgangsöffnung der Ausnehmung 16 des Konus 15 entspricht in etwa einem Durchmesser eines Schraubenkopfes. Durch Festziehen des Befestigungsmittels 17 wird der Konus 15 in den Hülsen 5 und 8- in Richtung des verjüngenden Abschnitts eingespannt.

Beim Einbau der Positionierhilfe werden die beiden Bauteile 1 und 2 derart zueinander angeordnet, dass die,Ausnehmungen 3 und 4 in etwa übereinander zu liegen kommen. Vorher ist die Hülse 5 in die erste Ausnehmung 3 einzubauen, da eine untere Ausgangsöffnung der zweiten Ausnehmung 4 kleiner als der Rand 6 der Hülse 5 ist. Zudem ist darauf zu achten, dass die Dichtung 14 bereits beim Aufsetzen und Ausrichten des zweiten Bauteils in eine dafür vorgesehene umlaufende Umrandung im Bereich der unteren Ausgangsöffnung der zweiten Ausnehmung eingesetzt ist und diese ausfüllt.

In einem zweiten Schritt wird die Hülse 8 in die zweite Ausnehmung 4 eingesetzt und in etwa konzentrisch zur Hülse 5 positioniert. Eine exakte Positionierung der Hülse 8 über der Hülse 5 ist nicht erforderlich, da ein Ein- und Durchstecken des Konus 15 in und durch die Hülse 8 die Hülse 8 selbst zur Hülse 5 positioniert. Mit zur Gänze eingestecktem Konus 15 in die Hülsen 5 und 8 sind die Hülsen 5, 8 zueinander ausgerichtet. Zur Fixierung wird das Befestigungsmittel 17 in die Ausnehmung 16 des Konus 15 eingeführt und dort verspannt. Oberhalb des Konus 15 in der Ausnehmung 13 wird in den zylindrischen Abschnitt eine Abdeckung in Form einer Abschlussschraube 18 angeordnet. Die Abschlussschraube 18 schützt den Konus 15 und das Befestigungsmittel 17 vor äußeren Einflüssen.

In den Zwischenraum zwischen Hülse 8 und dem zweiten Bauteil 2 wird nach der Fixierung der Hülse 8 ein Kunstharz eingefüllt. Das Kunstharz bedeckt vollständig eine seitliche Außenfläche der Hülse 8 und die Oberfläche der Ausnehmung 4. Nach einem Aushärten des Kunstharzes ist die Hülse 8 mit dem zweiten Bauteil 2 fest verbunden. Zur Sicherheit können durch die Durchbrechungen 10 in dem Rand 9 der Hülse 8 weitere Befestigungsmittel in dem Kunstharz zur Fixierung der Hülse 8 eingebracht werden.

Nach dem Aushärten des Kunstharzes wird die Abschlussschraube 18 demontiert, um das Befestigungsmittel 18 ebenfalls aus dem Konus 15 zu lösen. Mit dem Entfernen des Konus 15 aus der Hülse 5, 8 sind die beiden Bauteile 1 und 2 nicht mehr miteinander verbunden und können demontiert werden, um an anderer Stelle wieder montiert zu werden.

Bei der erneuten Montage der beiden Bauteile 1, 2 wird das zweite Bauteil 2 mittels Druckluft schwebend über dem ersten Bauteil in Stellung gebracht, so dass die Hülse 5 und die Hülse 8 in etwa konzentrisch zueinander angeordnet sind. In dem zweiten Bauteil sind Aussparungen 19 eingeformt, die in einem Grenzbereich zu dem ersten Bauteil 1 angeordnet sind. Mittels in das zweite Bauteil 2 eingeformter und mit den Ausformungen 19 verbundener Luftkanäle 20, wird Druckluft in die Ausnehmungen 19 eingeblasen. Mit genügend großem Druck wird so das zweite Bauteil 2 angehoben.

Sobald die beiden korrespondierenden Hülsen 5 und 8 in etwa konzentrisch zueinander positioniert sind, wird der Konus 15 in die Hülse 8 eingeführt. Beim Hindurchstecken in die Hülse 5 wird das zweite Bauteil 2 zum ersten Bauteil 1 ausgerichtet. Mit Festziehen des Befestigungsmittels 17 wird der Abstand zwischen den beiden Bauteilen 1 und 2 verringert, wobei die Druckluft das zweite Bauteil 2 noch beweglich hält, so dass der Konus 15 die beiden Bauteile 1, 2 zueinander bis zur Dichtlage ausrichtet. Mit Anliegen des Konus 15 in den Hülsen 5 und 8 ist das zweite Bauteil 2 auf dem ersten Bauteil 1 positioniert.

Durch diese einfache Positionierhilfe ist es möglich, den Unterbau einer Präzisionsmaschine zu demontieren und bei einem erneuten Aufbau wieder exakt zueinander zu positionieren.

## Patentansprüche

1. Verfahren zur Positionierung eines ersten und zweiten zueinander auszurichtenden Bauteils (1, 2), wobei die beiden Bauteile (1, 2) übereinander angeordnet werden und zumindest eines der Bauteile (1, 2) zu dem anderen Bauteil (1, 2) relativ verschoben und ausgerichtet wird, und ein die beiden Bauteile (1, 2) verbindendes Element fest in dem ersten Bauteil (1) und in einem zwei-ten Bauteil (2) in einer Ausnehmung (3, 4) angeordnet wird, wobei für eine feste Verbindung von dem Element mit dem zweiten Bauteil (2) ein Zwischenraum zwischen dem zweiten Bauteil (2) und Element mit einem sich verfestigenden Füllstoff ausgefüllt wird, sowie das verbindende Element wenigstens eine erste und zweite Halterung, einen Konus (15) und einen Stift (17) aufweist, wobei die erste, als Hülse (5) ausgebildete Halterung zur Aufnahme des Konus mit dem ersten Bauteil (1) fest verbunden, vorzugsweise verschraubt wird, **dadurch gekennzeichnet, dass** die zweite, als Hülse (8) ausgebildete Halterung, fluchtend zu der ersten Hülse (5) angeordnet wird, wobei der Konus (15) sich durch jeweils eine sich in einer Längsrichtung erstreckende Ausnehmung (12, 13) der ersten und zweiten Hülse (5, 8) erstreckt.

2. Verfahren nach Anspruch 1, **dadurch gekennzeichnet, dass** der Konus (15) mit einem stumpfen Ende in der ersten Hülse (5) angeordnet wird.

3. Verfahren nach Anspruch 1 oder 2, **dadurch gekennzeichnet, dass** der Stift (17) durch eine sich in einer Längsrichtung erstreckende Ausnehmung (16) des Konus (15) angeordnet wird zur lösbaren Verbindung der zweiten Hülse (8) mit der ersten Hülse (5).

4. Verfahren nach einem der vorstehenden Ansprüche, **dadurch gekennzeichnet, dass** der Stift (17) eine Schraube ist.

5. Verfahren nach einem der vorstehenden Ansprüche, **dadurch gekennzeichnet, dass** der Füllstoff in einen Zwischenraum zwischen zweiter Hülse (8) und einer Oberfläche der Ausnehmung (4) eingebracht wird.

6. Verfahren nach einem der vorstehenden Ansprüche, **dadurch gekennzeichnet, dass** der Füllstoff ein Kunstharz oder dergleichen ist.

7. Verfahren nach einem der vorstehenden Ansprüche, **dadurch gekennzeichnet, dass** nach einem Aushärten des Füllstoffes durch Lösen und Entfernen des Stifts (17) und Konus (15) die Verbindung der beiden Bauteile (1, 2) gelöst wird.

8. Anordnung mehrerer zueinander positionierbarer Elemente zur Positionierung eines ersten und zweiten zueinander auszurichtenden Bauteils (1, 2), wobei die Anordnung die beiden Bauteile (1, 2) umfasst, wobei die beiden Bauteile übereinander angeordnet sind und zumindest eines der Bauteile (1, 2) zu dem anderen Bauteil (1, 2) relativ verschiebbar und ausrichtbar ist, und eine erste und zweite Halterung und einen konus (15) umfasst, wobei die Halterungen (58) konzentrisch zu einander mittels des Konus (15) ausgerichtet sind, wobei die erste Halterung (5) in einer Ausnehmung (3) des ersten Bauteils (1) angeordnet und mit diesem fest verbunden ist und die zweite Halterung (8) in einer Ausnehmung (4) des zweiten Bauteils (2) angeordnet ist und ein Zwischenraum zwischen Bauteil (2) und Halterung mit einem sich verfestigendem Füllstoff ausgefüllt ist zur festen Verbindung von zweiter Halterung mit zweitem Bauteil (2), **dadurch gekennzeichnet, dass** sich der Konus (15) durch eine jeweils in den Halterungen (5,8) sich in einer Längsrichtung erstreckende Ausnehmung (12, 13) erstreckt.

9. Anordnung nach Anspruch 8, **dadurch gekennzeichnet, dass** sich ein Stift (17) durch eine im Konus (15) sich in einer Längsrichtung des Konus (15) erstreckende Ausnehmung (16) erstreckt zur lösbaren Verbindung der beiden Halterungen (5,8).

10. Anordnung nach Anspruch 9, bei welcher der Stift (17) als Schraube ausgebildet ist.

11. Anordnung nach Anspruch 8 bis 10, bei welcher der Konus (15) in den Halterungen (5,8) relativ verschiebbar ist und ein Abschnitt des Konus (15), der ein stumpfes Ende aufweist, sich bei Anlage in der ersten Halterung (5) aus dieser erstreckt.

## Claims

1. A method for positioning a first and second component (1, 2) which are to be orientated to one another, wherein the two components (1, 2) are arranged above one another and at least one of the components (1, 2) is displaced and orientated relatively to the other component (1, 2), and an element connecting the two components (1, 2) is arranged securely in the first component (1) and in a second component (2) in a recess (3, 4), wherein, for a secure connection of the element to the second component (2), an intermediate space between the second component (2) and the element is filled with a setting filler, and also the connecting element has at least one first and second holder, a cone (15) and a pin (17), wherein the first holder, constructed as a sleeve (5), is securely connected, preferably screwed, to the first component (1) for accommodating the cone, **characterised in that** the second holder, constructed as a sleeve (8), is arranged flush with the first sleeve (5), wherein the cone (15) extends through a recess (12, 13) of the first and second sleeve (5, 8) extending in a longitudinal direction in each case.

2. The method according to Claim 1, **characterised in that** an obtuse end of the cone (15) is arranged in the first sleeve (5).

3. The method according to Claim 1 or 2, **characterised in that** the pin (17) is arranged through a recess (16) of the cone (15) extending in a longitudinal direction for the releasable connection of the second sleeve (8) to the first sleeve (5).

4. The method according to any one of the preceding claims, **characterised in that** the pin (17) is a screw.

5. The method according to any one of the preceding claims, **characterised in that** the filler is introduced into an intermediate space between second sleeve (8) and a surface of the recess (4).

6. The method according to any one of the preceding claims, **characterised in that** the filler is a synthetic resin or the like.

7. The method according to any one of the preceding claims, **characterised in that** following a curing of the filler, the connection of the two components (1, 2) is released by releasing and removing the pin (17) and cone (15).

8. An arrangement of a plurality of elements which can be positioned to one another for positioning a first and second component (1, 2) to be orientated to one another, wherein the arrangement comprises the two components (1, 2), wherein the two components are arranged above one another and at least one of the components (1, 2) can be displaced and orientated relatively to the other component (1, 2), and comprises a first and second holder and a cone (15), wherein the holders (5, 8) are orientated concentrically to one another by means of the cone (15), wherein the first holder (5) is arranged in a recess (3) of the first component (1) and is securely connected to the same and the second holder (8) is arranged in a recess (4) of the second component (2) and an intermediate space between component (2) and holder is filled with a setting filler for secure connection of second holder to the second component (2), **characterised in that** the cone (15) extends through a recess (12, 13) extending in a longitudinal direction in the holders (5, 8) in each case.

9. The arrangement according to Claim 8, **characterised in that** a pin (17) extends through a recess (16) in the cone (15) extending in a longitudinal direction of the cone (15) for the releasable connection of the two holders (5, 8).

10. The arrangement according to Claim 9, in which the pin (17) is constructed as a screw.

11. The arrangement according to Claim 8 to 10, in which the cone (15) can be displaced relatively in the holders (5, 8) and a section of the cone (15) which has an obtuse end, when it rests in the first holder (5), extends out of the same.

## Revendications

1. Procédé pour le positionnement d'une première et d'une deuxième pièce (1, 2) à orienter l'une vers l'autre, dans lequel les deux pièces (1, 2) sont disposées l'une par-dessus l'autre et au moins l'une des pièces (1, 2) est décalée et orientée par rapport à l'autre pièce (1, 2), et un élément reliant les deux pièces (1, 2) est installé fixement dans la première pièce (1) et dans une deuxième pièce (2), dans un évidement (3, 4), dans lequel, pour un assemblage solide de l'élément avec la deuxième pièce (2), un espace intermédiaire entre la deuxième pièce (2) et l'élément est rempli avec un agent de remplissage solidifiant, et l'élément comportant au moins un premier et un deuxième support, un cône (15) et une tige (17), parmi lesquels le premier support, conçu comme une douille (5) pour la réception du cône, est relié fixement à la première pièce (1), de préférence vissé, **caractérisé en ce que** le deuxième support, conçu comme une douille (8), est disposé en affleurement avec la première douille (5), le cône (15) s'étendant à travers un évidement (12, 13) évoluant dans le sens longitudinal, respectivement dans la première et la deuxième douille (5, 8).

2. Procédé selon la revendication 1, **caractérisé en ce que** le cône (15) est disposé avec une extrémité tronquée dans la première douille (5).

3. Procédé selon la revendication 1 ou 2, **caractérisé en ce que** la tige (17) est disposée à travers un évidement (16) évoluant dans le sens longitudinal dans le cône (15), pour l'assemblage détachable de la deuxième douille (8) avec la première douille (5).

4. Procédé selon l'une des revendications précédentes, **caractérisé en ce que** la tige (17) est une vis.

5. Procédé selon l'une des revendications précédentes, **caractérisé en ce que** l'agent de remplissage est introduit dans un espace intermédiaire entre la deuxième douille (8) et une surface de l'évidement (4).

6. Procédé selon l'une des revendications précédentes, **caractérisé en ce que** l'agent de remplissage est une résine synthétique ou autre.

7. Procédé selon l'une des revendications précédentes, **caractérisé en ce que** suite au durcissement de la résine synthétique, l'assemblage des deux pièces (1, 2) est défait en détachant et en éloignant la tige (17) et le cône (15).

8. Agencement de plusieurs éléments aptes à être positionnés les uns par rapport aux autres, pour le positionnement d'une première et d'une deuxième pièce (1, 2) à orienter l'une par rapport à l'autre, dans lequel l'agencement comprend les deux pièces (1, 2), dans lequel les deux pièces sont disposées l'une par-dessus l'autre et au moins l'une des pièces (1, 2) peut être décalée et orientée par rapport à l'autre pièce (1, 2), et comprend un premier et un deuxième support et un cône (15), les supports (5, 8) étant orientés l'un vers l'autre de façon concentrique au moyen du cône (15), le premier support (5) étant disposé dans un évidement (3) de la première pièce (1) et relié fixement avec celle-ci, et le deuxième support (8) étant disposé dans un évidement (4) de la deuxième pièce (2), et dans lequel un espace intermédiaire entre la pièce (2) et le support est rempli avec un agent de remplissage solidifiant, pour l'assemblage fixe du deuxième support avec la deuxième pièce (2), **caractérisé en ce que** le cône (15) s'étend à travers un évidement (12, 13) évoluant dans le sens longitudinal dans chacun des supports (5, 8).

9. Agencement selon la revendication 8, **caractérisé en ce qu'**une tige (17) s'étend à travers un évidement (16) dans le cône (15), évoluant dans le sens longitudinal du cône (15), pour l'assemblage détachable des deux supports (5, 8).

10. Agencement selon la revendication 9, dans lequel la tige (17) est conçue comme une vis.

11. Agencement selon l'une des revendications 8 à 10, dans lequel le cône (15) peut être déplacé de façon relative dans les supports (5, 8), et une section du cône (15) comportant une extrémité tronquée s'étend hors du premier support (5) lors de l'application dans celui-ci.
